(19) Europäisches Patentamt
European Patent Office
Office européen des brevets

(11) **EP 2 450 542 A1**

(12) **EUROPEAN PATENT APPLICATION**
published in accordance with Art. 153(4) EPC

(43) Date of publication:
**09.05.2012 Bulletin 2012/19**

(51) Int Cl.:
*F01N 3/28* (2006.01)     *B01D 53/86* (2006.01)

(21) Application number: **10794173.4**

(22) Date of filing: **30.06.2010**

(86) International application number:
**PCT/JP2010/061118**

(87) International publication number:
**WO 2011/002005 (06.01.2011 Gazette 2011/01)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **01.07.2009 JP 2009156538**
**25.03.2010 JP 2010070705**

(71) Applicant: **Ibiden Co., Ltd.**
**Ogaki-shi, Gifu 503-8604 (JP)**

(72) Inventors:
• **SUGINO, Junichi**
  **Takahama-shi**
  **Aichi 444-1301 (JP)**
• **YAMAZAKI, Tsutomu**
  **Takahama-shi**
  **Aichi 444-1301 (JP)**

(74) Representative: **HOFFMANN EITLE**
**Patent- und Rechtsanwälte**
**Arabellastraße 4**
**81925 München (DE)**

(54) **MAT MATERIAL AND EXHAUST GAS TREATMENT APPARATUS**

(57)     In the present invention, there is provided a mat material including a glass fiber. The glass fiber includes 52 to 62% by weight of $SiO_2$, 9 to 17% by weight of $Al_2O_3$, 17 to 27% by weight of CaO, 0 to 9% by weight of MgO, 0 to 4% by weight of $TiO_2$, and 0 to 5% by weight of ZnO. The glass fiber includes substantially no $B_2O_3$. The glass fiber includes 0 to 2% by weight of a total sum of $Na_2O$ + $K_2O$. The mat material is interposed between an upper base and a lower base. A surface pressure is 100 kPa or more when a temperature of the upper base and a temperature of the lower base reaches 700 °C and 400°C, respectively, in a case of increasing the temperature of the upper base at a temperature increase rate of 15 °C/minute at the same time of increasing the temperature of the lower base at a temperature increase rate of 8.6 °C/minute where GBD (Gap Bolt Density) = 0.35 $g/cm^3$.

FIG.3

**Description**

TECHNICAL FIELD

The present invention relates to a mat material and an exhaust gas processing apparatus.

BACKGROUND ART

For the past century and continuing, the number of automobiles is drastically rising. In proportion to this rise, the amount of exhaust gas released from internal combustion engines of the automobiles is rapidly increasing. Since various substances contained in the exhaust gas (particularly, exhaust gas of diesel engines) lead to air pollution and the like, the exhaust gas containing such substances has a serious effect on the global environment.

Under such circumstances, various exhaust gas processing apparatuses have been proposed and put to actual use. A typical exhaust gas processing apparatus has a tubular member (casing) disposed at the midstream of an exhaust pipe that is connected to an exhaust gas manifold of the engine, and an exhaust gas processing body accommodated within the tubular casing. The exhaust gas processing body has an inlet and an outlet for the exhaust gas, and a large number of fine-sized pores are provided within the exhaust gas processing body. Examples of the exhaust gas processing body include catalyst carriers, and exhaust gas filters such as Diesel Particulate Filters (DPFs). In the case of the DPF, for example, when the exhaust gas enters from the inlet of the exhaust gas processing body and exits from the outlet of the exhaust gas processing body within the casing, particles are trapped on walls surrounding the pores to thereby remove the particles from the exhaust gas.

A retaining seal member is provided between the exhaust gas processing body and the casing. The retaining seal member prevents damage caused by the contact between the exhaust gas processing body and the casing when the vehicle or the like moves, and prevents the exhaust gas from leaking from a gap between the casing and the exhaust gas processing body. Further, the retaining seal member also prevents the exhaust gas processing body from falling off from the casing due to the exhaust gas pressure. On the other hand, the exhaust gas processing body is required to maintain a relatively high temperature in order to maintain its reaction, and the retaining seal member is required to be heat resistant. In order to satisfy these requirements, the retaining seal member may be made of a mat material which includes inorganic fiber such as alumina fiber.

The mat material is wound on at least a portion of an outer peripheral surface of the exhaust gas processing body, excluding the inlet and outlet, and is integrally fixed to the exhaust gas processing body by taping or the like in order to function as the retaining seal member. Thereafter, the exhaust gas processing body, having the mat material integrally fixed thereon as the retaining seal member, is press-fit within the casing to form the exhaust gas processing apparatus.

Typically, the mat material contains, for example, an inorganic fiber (e.g., alumina fiber) and an organic binder and is manufactured by a needling method, a paper-making process, or the like. Recently, a mat material using glass fiber (e.g., e-glass) is proposed to be used instead of a mat material using alumina fiber for the purpose of, for example, cost reduction (see, for example, Patent Document 1).

Prior Art Reference

Japanese National Publication of International Patent Application No. 2006-516043

DISCLOSURE OF THE INVENTION

PROBLEM TO BE SOLVED BY INVENTION

With a conventional mat material using glass fiber such as e-glass, there is a problem that the initial retaining force of the conventional mat material is low.

Along with the increase and the decrease of temperature due to the flow of exhaust gas and the cease of the flow of exhaust gas, the exhaust gas processing body inside the exhaust gas processing apparatus is subjected to repetitive cycles of expansion and contraction. Accordingly, in correspondence with the expansion and contraction of the exhaust gas process body, the retaining seal member repeatedly receives load from compression and decompression during use. However, in the case of the mat material using glass fiber (e.g., e-glass), the repetitive cycles of expansion and contraction leads to a problem of significantly degrading the retaining force of the mat material.

Therefore, in a case of applying the mat material using glass fiber (e.g., e-glass) to the retaining seal member, the exhaust gas processing body being held by the retaining seal member may fall off from the retaining seal member due to the lack of initial retaining force and/or the deterioration of retaining force with time.

In light of the above, it is an object of the present invention to provide a mat material having high initial retaining force and a relatively satisfactory retaining force even after repeatedly receiving load from compression and decompression even where the mat material includes glass fiber. Further, it is an object of the present invention to provide an exhaust gas processing apparatus including the aforementioned mat material as the retaining seal member.

MEANS FOR SOLVING PROBLEM

According to the present invention, there is provided a mat material including a glass fiber, wherein the glass fiber includes 52 to 62% by weight of $SiO_2$, 9 to 17% by weight of $Al_2O_3$, 17 to 27% by weight of CaO, 0 to 9% by weight of MgO, 0 to 4% by weight of $TiO_2$, and 0 to 5% by weight of ZnO, wherein the glass fiber includes substantially no $B_2O_3$, wherein the glass fiber includes 0 to 2% by weight of a total sum of $Na_2O + K_2O$, wherein the mat material is interposed between an upper base and a lower base, wherein a surface pressure is 100 kPa or more when a temperature of the upper base and a temperature of the lower base reaches 700 °C and 400 °C, respectively, in a case of increasing the temperature of the upper base at a temperature increase rate of 15 °C/minute at the same time of increasing the temperature of the lower base at a temperature increase rate of 8.6 °C/minute where GBD (Gap Bolt Density) = 0.35 g/cm$^3$.

EFFECT OF INVENTION

With the present invention, even in a case of a mat material including glass fiber, there can be provided a mat material that can attain high initial retaining force and maintain a comparatively satisfactory retaining force even after repeatedly receiving load from compression and decompression. Further, there can be provided an exhaust gas processing apparatus that uses the mat material as a retaining seal member.

BRIEF DESCRIPTION OF THE DRAWINGS

FIG. 1 is a perspective view schematically illustrating an example of a mat material according to the present invention.
FIG. 2 is a schematic diagram in a case of forming an exhaust gas processing apparatus with use of the mat material of the present invention.
FIG. 3 is a schematic diagram illustrating an example of a configuration of an exhaust gas processing apparatus according to the present invention.
FIG. 4 is a schematic diagram illustrating an example of a flow of a method for manufacturing a mat material according to the present invention.
FIG. 5 is a schematic diagram illustrating another example of a flow of a method for manufacturing a mat material according to the present invention.
FIG. 6 is a schematic diagram illustrating a configuration of a testing apparatus for evaluating initial surface pressure.
FIG. 7 is a graph illustrating a relationship between a temperature of an upper base and an initial surface pressure of samples of examples 1, 2, and comparative example 1.
FIG. 8 is a graph illustrating a graph of values of surface pressure ($P_0$) of samples of examples 1, 2, and comparative example 1.
FIG. 9 is a graph illustrating surface pressure after 1000 cycles ($P_{1000}$) of samples of example1, example 2, and comparative example 1.
FIG. 10 is a graph indicating changes of temperature relative to the initial surface pressure of example 3 and comparative example 2.

DESCRIPTION OF EMBODIMENTS

In the following, embodiments of the present invention are described with reference to the accompanying drawings.

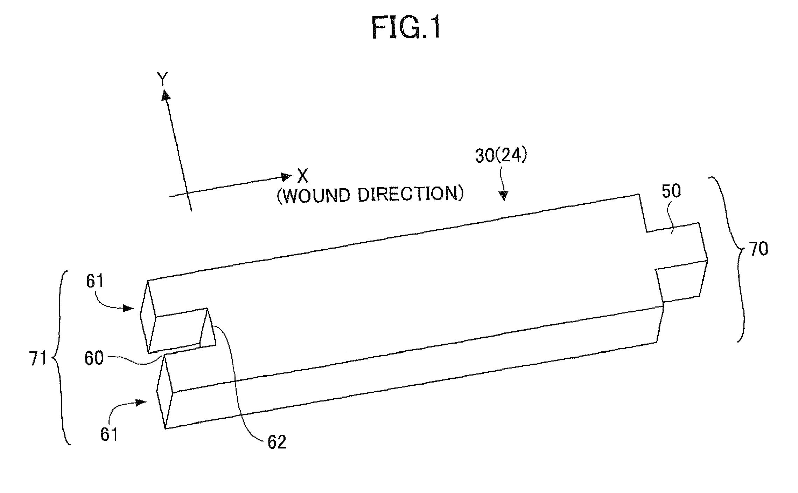

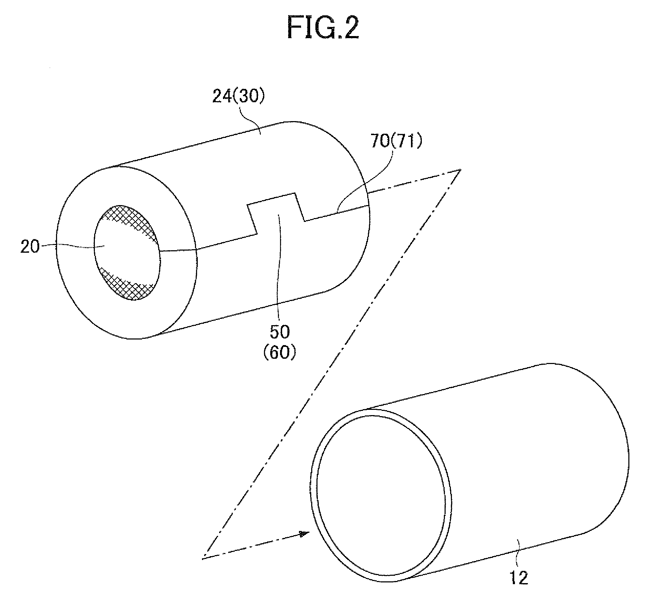

FIG. 1 is a perspective view schematically illustrating an example of the mat material according to an embodiment of the present invention, and FIG. 2 is a diagram for explaining forming of an exhaust gas processing apparatus which uses the mat material as the retaining seal member according to this embodiment of the present invention.
As illustrated in FIG. 1, a mat material 30 according to this embodiment has a substantially rectangular shape with long sides parallel to a direction X and short sides parallel to a direction Y. A short side 70 has a protrusion 50 for fitting. A short side 71 has a recess 60 for fitting or, has two protrusions defining the recess 60. The shapes of the two short sides 70 and 71 are not limited to those illustrated in FIG. 1, and each of the two sides 70 and 71 may or may not have parts such as the protrusion and recess for fitting. In addition, the short side 70 may have a plurality of protrusions, and the short side 71 may have a plurality of recesses. The "substantially rectangular shape" of the mat material 30 includes the protrusion 50 and the recess 60 illustrated in FIG. 1, and also includes a shape wherein a corner part formed by mutually adjacent long and short sides forms an angle other than 90° (e.g., a rounded shape having a curvature).

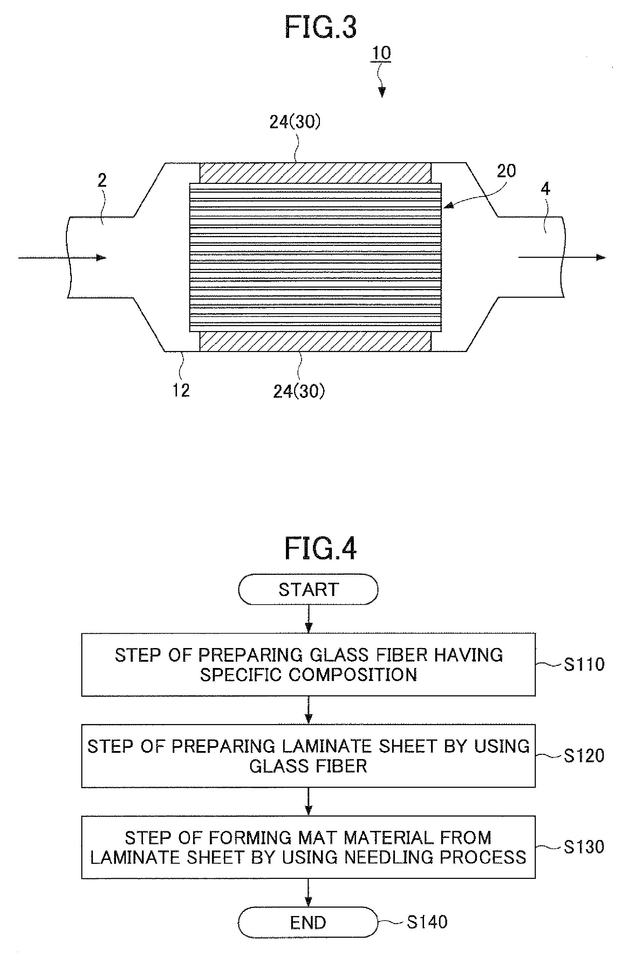

When using the mat material 30 as a retaining seal member 24, the longitudinal direction along the long side, that is, the direction X, corresponds to the winding direction in which the retaining seal member 24 (or mat material 30) is wound on an exhaust gas processing body 20 which is illustrated in FIG. 3 and is used as a catalyst carrier or the like. In addition, when the retaining seal member 24 is wound on the exhaust gas processing body 20, the projection 50 fits into the recess 60 as illustrated in FIG. 3 and the retaining seal member 24 is fixed to the exhaust gas processing body 20. Thereafter, the exhaust gas processing body 20 having the retaining seal member 24 wound thereon is press-fit and accommodated within a tubular casing 12 that is made of a metal or the like.

The mat material may be a mat material including an inorganic fiber (e.g., alumina fiber) and an organic binder. Glass fiber such as e-glass is recently proposed to be used as the inorganic fiber for the purpose of, for example, cost reduction. Here, "e-glass" refers to a generic term of the glass including the composition indicated in the column "COMPOSITION OF E-GLASS" of Table 1.

That is, the e-glass is a glass includes 52 to 62% by weight of $SiO_2$, 12 to 16% by weight of $Al_2O_3$, 16 to 25% by weight of CaO, 0 wt% to 5 wt% by weight of MgO, 5 wt% to 10 wt% by weight of $B_2O_3$, 0 to 1.5% by weight of $TiO_2$, or 0 to 2% by weight a total sum of $Na_2O + K_2O$.

However, with a mat material using a glass fiber such as e-glass, there is a problem of having low initial retaining force compared to a mat material using an alumina fiber.

Further, the exhaust gas processing body inside the exhaust gas processing apparatus repeatedly receives cycles of expansion and contraction along with the increase and the decrease of temperature due to the flow or stop of exhaust gas. Accordingly, the retaining seal member repeatedly receives load of compression and decompression in correspondence with the behavior (expansion and contraction) of the exhaust gas processing body during use. However, with a mat material using glass fiber such as e-glass, the retaining force of the mat material significantly decreases if the cycles of compression and decompression are repeated.

Accordingly, in a case where a mat material using glass fiber such as e-glass is used for a retaining seal member, the lack of initial retaining force of the mat material and/or chronological decrease of the retaining force of the mat material may cause the exhaust gas processing body being held by the mat material to fall off.

Under such circumstance, the inventor of the present application has dedicated himself/herself to research and development. As a result, it has been found that there can be obtained a mat material having significantly high initial retaining force and being capable of maintaining a comparatively satisfactory retaining force even where load is repeatedly received from compression and decompression when a glass fiber having a specific composition and characteristic is used. This has lead to the present invention.

In other words, with the present invention, there is provided a mat material including a glass fiber, wherein the glass fiber includes 52 to 62% by weight of $SiO_2$, 9 to 17% by weight of $Al_2O_3$, 17 to 27% by weight of CaO, 0 to 9% by weight of MgO, 0 to 4% by weight of $TiO_2$, and 0 to 5% by weight of ZnO, wherein the glass fiber includes substantially no $B_2O_3$, wherein the glass fiber includes 0 to 2% by weight of a total sum of $Na_2O + K_2O$, wherein the mat material is interposed between an upper base and a lower base, wherein a surface pressure is 100 kPa or more when a temperature of the upper base and a temperature of the lower base reaches 700 °C and 400°C, respectively, in a case of increasing the temperature of the upper base at a temperature increase rate of 15 °C/minute at the same time of increasing the temperature of the lower base at a temperature increase rate of 8.6 °C/minute where GBD (Gap Bolt Density) = 0.35 g/cm$^3$.

The method of measuring the surface pressure of the mat material is described in detail in the following embodiments.

The column "COMPOSITION OF GLASS FIBER OF PRESENT INVENTION" of the below-described Table 1 indicates the composition of the glass fiber included in the mat material of the present invention.
Further, the glass fiber includes 52-62% by weight of $SiO_2$, 9-17% by weight of $AlO_3$, 17-27% by weight of CaO, 0-9% by weight of MgO, 0-4% by weight of $TiO_2$, and 0-5% by weight of ZnO. Further, the glass fiber includes substantially no $B_2O_3$. Further, the glass fiber includes 0-2% by weight of the total sum of $Na_2O + K_2O$. Unlike e-glass, the glass fiber used for the mat material of the present invention has a feature of having substantially no $B_2O_3$. Typically, $B_2O_3$ is considered as having the role of lowering the softening point of glass fiber. Because $B_2O_3$ is excluded from the glass fiber of the present invention, the lowering of the softening point of the glass fiber can be prevented. Further, this increases the strength of glass fiber in a high temperature.

The mat material of the present invention includes a feature of having a significantly high initial retaining force. Further, the mat material of the present invention can prevent the retaining force from decreasing even in an environment of repeatedly receiving load from compression and decompression in a high temperature. Further, the mat material of the present invention can exhibit a steady holding force for a long period.

In the mat material of the present invention, the composition of the glass fiber particularly is preferred to include 59-62% by weight of $SiO_2$ 12-15% by weight of $Al_2O_3$, 20-24% by weight of CaO, 1-4% by weight of MgO, 0-0.9% by weight of $TiO_2$, include substantially no ZnO, and include 0-1% by weight of the total sum of $Na_2O + K_2O$ (hereinafter also referred to as "first glass fiber composition").

Alternatively, the composition of the glass fiber is preferred to include 56-62% by weight of $SiO_2$, 9-15% by weight of $Al_2O_3$, 17-25% by weight of CaO, 0-5% by weight of MgO, 0-4% by weight of $TiO_2$, and 0-5% by weight of ZnO, and have 0-1% by weight of the total sum of $Na_2O + K_2O$ (hereinafter also referred to as "second glass fiber composition") .

The first and the second glass fiber compositions of the present invention are indicated together in the below-described Table 1.

In addition to including glass fiber, the mat material 30 of the present invention may also include an organic binder.

For example, an epoxy resin, an acrylic resin, a rubber resin, or a styrene resin may be used as the organic binder. The amount of organic binder contained in the mat material (weight of organic binder relative to the total weight of the mat material) is preferably, for example, 1-10% by weight. However, in a case of using an exhaust gas processing apparatus including the mat material, the organic binder impregnated in the mat material becomes one of the causes for increasing the amount of organic components discharged from the exhaust gas processing apparatus. Therefore, the amount of organic binder contained in the mat material is preferred to be as low as possible. For example, the organic binder does not need to be impregnated in the mat material.

The mat material according to the present invention may include an expansive material. It is preferable for the expansive material to have a characteristic of expanding in a range from 400°C to 800°C.

For example, vermiculite, bentonite, bronze mica, perlite, expandable graphite, and expandable fluoro-mica may be used as the expansive material.

In a case where the expansive material is used, the mat material 30 expands in a temperature ranging from 400°C, to 800°C. Accordingly, the retaining force of the mat material 30 can be improved even in a high temperature range (above 700°C) in which the strength of the glass fiber decreases.

The additive amount of the expansive material is not limited in particular. For example, it is preferable for the additive amount of the expansive material to range from 10%-50% by weight with respect to the entire weight of the mat material 30.

The mat material 30 of the present invention can be used as, for example, a retaining seal member of the exhaust gas processing apparatus 10. FIG. 3 illustrates an exemplary configuration of the exhaust gas processing apparatus 10 according to the present invention.

The exhaust gas processing apparatus 10 includes an exhaust gas processing body 20 that is wound around an outer peripheral surface of the retaining seal member 24, a casing 12 accommodating the exhaust gas processing body 20, an inlet pipe (for exhaust gas) 2 connected to the inlet side of the casing 12, and an outlet pipe (for exhaust gas) 4 connected to the outlet side of the casing 12. The inlet pipe 2 has a tapered shape with a diameter which increases towards the position where the inlet pipe 2 connects to the casing 12. The outlet pipe 4 has a tapered shape with a diameter which increases towards the position where the outlet pipe 4 connects to the casing 12. In this example of FIG. 3, the exhaust gas processing body 20 includes an opening serving as an inlet of exhaust gas and an opening serving as an outlet of exhaust gas. The exhaust gas processing body 20 is formed by a catalyst carrier having a large number of penetration holes extending in a direction parallel to the exhaust gas flow. The catalyst carrier may have, for example, a honeycomb structure cordierite. The exhaust gas processing apparatus 10 of the present invention is not limited to the configuration described with FIG. 3. For example, this embodiment is similarly applicable to an exhaust gas processing apparatus in which a portion of the penetration holes in an exhaust gas filter (e.g., a DPF including a porous silicon carbide, a porous cordierite, or a porous aluminum titanate) forming the exhaust gas processing body 20 is blocked.

The retaining seal member 24 is formed by the mat material 12 including the above-described glass fiber. Accordingly, the retaining seal member 24 has a satisfactory retaining force with respect to the exhaust gas processing boy at an initial stage. Further, in the above-described exhaust gas processing apparatus 10, the decreasing rate of retaining force of the retaining seal member 24 can be significantly restrained even where load from compression and decompression is repeatedly applied to the retaining seal member 24 in correspondence with the flowing and stopping of the exhaust gas. Therefore, the exhaust gas processing body 20 can be prevented from deviating or falling off from a predetermined position after a long period of use. Thereby, the reliability of the exhaust gas processing apparatus 10 is improved.

(Method 1 for manufacturing a mat material of the present invention)

Next, an example of a method for manufacturing a mat material according to the present invention is described with reference to FIG. 4.

FIG. 4 is a schematic diagram of an example illustrating the flow of manufacturing the mat material according to the present invention.

The method for manufacturing the mat material of the present invention includes:

(A) a step of preparing a glass fiber including the above-described composition (S110);
(B) a step of fabricating a laminate sheet using the glass fiber (S120); and
(C) a step of forming a mat material with a needling process from the laminate sheet (S130).

In this method, the mat material is fabricated by using a so-called "needling process". The needling process is a generic term of a method for manufacturing a mat material whereby a needle is pushed in and pulled out of a laminate sheet including an inorganic fiber.

Next, each of the steps is described in detail.

(Step S110)

In step S110, a glass fiber including the above-described composition is prepared. The length of the glass fiber is not limited in particular. However, the glass fiber is preferred to be comparatively long so that fibers can be easily interlaced during a subsequent needling process. The "average length" of the glass fiber preferably ranges from 5 mm to 100 mm (e.g., 50 mm). The "average length" is the average entire length of 100 randomly extracted fibers.

The diameter of the glass fiber is not limited in particular. However, the average diameter of the glass fiber is preferred to range from, for example, 9 $\mu$m to 13 $\mu$m (e.g., 11 $\mu$m). The "average diameter" is the average diameter of 300 randomly extracted fibers being measured with a SEM (Scanning Electron Microscope).

(Step S120)

Then, an opening process using the above-described glass fiber is performed. Thereby, a cotton-like laminate sheet can be formed. The opening process may be performed by, for example, a carding process. With this process, a laminate sheet is formed by forming bonded fabrics (referred to as a "web") and laminating many of the bonded fabrics.

(Step S130)

Then, a mat material is formed by performing the "needling process" on the laminate sheet.

In a normal case of performing the needling process, a needling apparatus is used.

Normally, the needling apparatus includes a needle board capable of reciprocating in a direction in which a needle is pushed in and pulled out (normally, in a vertical direction) and a pair of support plates (one provided on the front side of the laminate sheet and the other provided on the rear side of the laminate sheet). Many needles (e.g., density of 25-5000 needles per 100 cm$^2$) are attached to the needle board so that the needles can be pushed in and pulled out with respect to the laminate sheet. Each of the support plates has many through-holes for the needles. Accordingly, in a state where the pair of support plates is pressed against both sides of the laminate sheet, the needle board is moved toward and away with respect to the laminate sheet. Thereby, needles can be pushed in and pulled out with respect to the laminate sheet. Thus, a mat material having interlaced glass fibers can be obtained.

Further, in another embodiment, the needling apparatus may include 2 sets of needle boards. Each needle board includes a support plate. Each set of needle boards is mounted to the front and rear surfaces of the laminate sheet, and the support plate bounds the laminate sheet from both sides of the laminate sheet. The needles are arranged so that the positions of the needles of one of the needle boards do not overlap with those of the needles of the other of the needle boards during a needling process. Further, taking the needle arrangement of both sets of needle boards into consideration, many through-holes are provided in the corresponding support plates so that the needles do not contact the support plates in a case where the needling process is performed on both sides of the laminate sheet. By using such needling apparatus, the needling process may be performed on both sides of the laminate sheet with 2 sets of needling boards where the laminate sheet is sandwiched by the 2 sets of support plates from both sides. By performing the needling process with the above-described method, process time can be reduced.

Then, a thermal process is performed on the glass fiber. The temperature of the thermal process preferably ranges from, for example, 600 °C to 800 °C (e.g., 700 °C). The time of the thermal process preferably ranges from, for example, 10 minutes to 24 hours (e.g., 20 minutes).

Finally, the mat material manufactured in the above-described manner is cut (a shape having a recess and a protrusion on the end surfaces of a rectangular solid as illustrated in FIG. 1). Thereby, a mat material according to the present invention is obtained.

(Method 2 for manufacturing a mat material of the present invention)

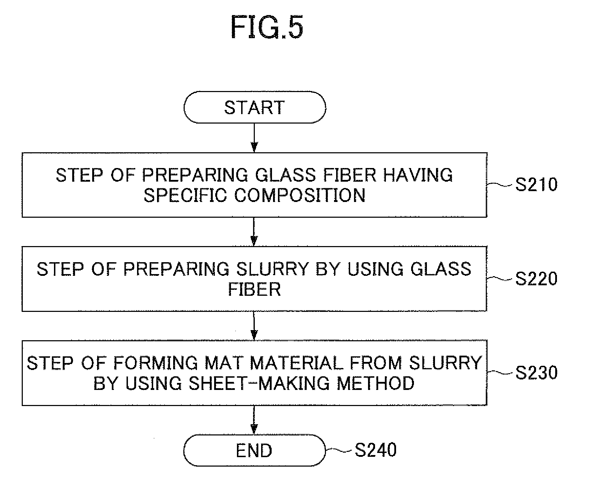

Next, another example of a method for manufacturing a mat material according to the present invention is described with reference to FIG. 5.

FIG. 5 is a schematic diagram of another example illustrating the flow of manufacturing the mat material according to the present invention.

The method for manufacturing the mat material of the present invention includes:

(A) a step of preparing a glass fiber including the above-described composition (S210);
(B) a step of preparing a slurry using the glass fiber (S220); and
(C) a step of forming a mat material with a paper-making process from the slurry (S230).

In this method, the mat material is fabricated by using a so-called "paper-making process". The paper-making process refers to a method for manufacturing a mat material whereby a slurry of an inorganic fiber is filled into a paper-making die, and the paper-making die is absorbed and dehydrated.

Next, each of the steps is described in detail.

(Step S210)

Because the step of preparing the glass fiber is substantially the same as step S110 of the needling process, further description of the step of preparing the glass fiber is omitted.

It is to be noted that, the glass fiber is preferred to be comparatively short in a case of the paper-making process. It is to be noted that the "average length" of the glass fiber is preferred to range from, for example, 1 mm to 10 mm (e.g., 3 mm). Although the diameter of the glass fiber is not limited in particular, the "average diameter" is preferred to range from, for example, 9 $\mu$m to 13 $\mu$m (e.g., 11 $\mu$m).

(Step S220)

Then, a slurry is prepared with the glass fiber obtained in Step S210 by using the following method.

First, a predetermined amount of glass fiber and an organic binder are mixed inside water. Further, an inorganic binder and/or a flocculant may be added to the mixture. Further, a material including the above-described expansive material may also be added.

For example, an alumina sol and a silica sol are used as the inorganic binder. Further, latex or the like may be used as the organic binder. The amount of organic binder contained in the mixture is preferred to be 20 wt%. In a case where the amount of organic binder contained in the mixture is greater than 20 wt%, the amount of organic components discharged from the exhaust gas processing apparatus increases significantly.

Then, the obtained mixture is agitated inside a mixer (e.g., paper-making apparatus), to thereby prepare a slurry having its fibers opened. Normally, the agitation is preferred to be performed for approximately 20 to 120 seconds.

(Step S230)

Then, a mat material is manufactured with the obtained slurry by using the paper-making process.

First, a slurry is guided into, for example, a molding die having fine holes formed at a bottom thereof. Further, a raw material mat having a predetermined shape is obtained by absorbing moisture with an absorbing apparatus or the like from a lower side of the molding die, and performing a dehydration process.

Then, a mat material is obtained by compressing the raw material mat with a pressing apparatus and heating/drying the raw material mat at a predetermined temperature. The compression process is preferred to be performed so that the sheet density after the compression process becomes approximately 0.10 g/cm$^3$ to 0.40 g/cm3. For example, the heating/drying process is preferred to be performed by having the raw material mat placed inside a thermal processing apparatus (e.g., oven) at a temperature of 90 °C to 180 °C for approximately 5 to 60 minutes.

[Embodiments]

Effects of the present invention are described with reference to the following examples.

(Example 1)

First, a commercially available glass fiber having an average diameter of 11 $\mu$m ø is prepared. The nominal composition of this glass fiber is indicated in the column "composition of first glass fiber" of Table 1. More specifically, this glass fiber includes 59 to 62% by weight of $SiO_2$, 12 to 15% by weight of $Al_2O_3$, 20 to 24% by weight of CaO, 1 to 4% by weight of MgO, and 0 to 0.9% by weight of $TiO_2$, includes substantially no ZnO, and includes 0-1% by weight of a total sum of $Na_2O$ and $K_2O$. It is to be noted that this glass fiber includes substantially no $B_2O_3$.

[Table 1]

| Wt% | COMPOSITION OF E-GLASS | COMPOSITION OF GLASS FIBER OF PRESENT INVENTION | COMPOSITION OF FIRST GLASS FIBER | COMPOSITION OF SECOND GLASS FIBER |
|---|---|---|---|---|
| $SiO_2$ | 52-62% | 52-62% | 59-62% | 56-62% |
| $Al_2O_3$ | 12-16% | 9-17% | 12-15% | 9-15% |
| CaO | 16-25% | 17-27% | 20-24% | 17-25% |
| MgO | 0-5% | 0-9% | 1-4% | 0-5% |
| $B_2O_3$ | 5-10% | - | - | - |
| $TiO_2$ | 0-1.5% | 0-4% | 0-0.9% | 0-4% |
| ZnO | - | 0-5% | - | 0-5% |
| $Na_2O+K_2O$ | 0-2% | 0-2% | 0-1% | 0-1% |

The glass fiber was cut so that the average fiber length is 3 mm. Further, the glass fiber was used after maintaining the glass fiber at a temperature of 700 °C for 20 minutes.

Then, 30 g of the glass fiber was placed inside a mixer containing 6 l of water, agitated for 1 minute. Thereby, fibers of the glass fiber were opened. Then, latex 3.5 g (solid content 50%), alumina sol 1.2 g (solid content 20%), and flocculant 30 g (solid content 0.5%) are added to the water containing the glass fiber after having its fibers opened. The water is further agitated for 1 minute. Thereby, a slurry is prepared.

Then, the slurry is injected to a paper-making apparatus, and moisture is filtered by the paper-making apparatus. Thereby, a raw material mat is obtained. The raw material mat is maintained at 105 °C and dried in a state compressed by a pressing apparatus. Thereby, a mat material having a sheet density of approximately 0.14 g/cm³ is obtained.

Then, the mat material is cut into a predetermined size, to thereby obtain a sample of the mat material (hereinafter referred to as sample of first example).

(Example 2)

The mat material of example 2 is manufactured with the same method as that of example 1. In example 2, a commercially available glass fiber (having an average diameter 1 μmφ) having a nominal composition indicated in the column "composition of second glass fiber" of the above-described Table 1 is used as the glass fiber in example 2. More specifically, the composition of the glass fiber includes 56 to 62% by weight of Si02, 9 to 15% by weight of $Al_2O_3$, 17 to 25% by weight of CaO, 0 to 5% by weight of MgO, 0 to 4% by weight of $TiO_2$, 0 to 5 % by weight of ZnO and includes 0 to 1% by weight the total sum of $Na_2O$ and $K_2O$. Further, the glass fiber was cut so that the average fiber length is 3 mm. Further, the glass fiber was used after maintaining the glass fiber at a temperature of 700 °C for 20 minutes.

(Comparative Example 1)

A mat material according to comparative example 1 is manufactured with the same method as that of example 1. In the comparative example 1, a commercially available e-glass fiber (typical e-glass) (having an average diameter 11 μmφ) was used as the glass fiber. Further, the glass fiber was cut so that the average fiber length is 3 mm. Further, the glass fiber was used after maintaining the glass fiber at a temperature of 700 °C for 20 minutes.

The nominal composition of the used e-glass fiber is indicated in the above-described Table 1. More specifically, the glass fiber includes 52 to 62% by weight of $SiO_2$, 12 to 16% by weight of $Al_2O_3$, 16 to 25% by weight of CaO, 0 to 5% by weight of MgO, 5 to 10% by weight of $B_2O_3$, 0 to 1.5% by weight of $TiO_2$, and includes 0 to 2% by weight of a total sum of $Na_2O$ and $K_2O$.

(Initial surface pressure evaluation test)

In order to evaluate the retaining force of the mat material in a high temperature, an initial surface pressure evaluation test was performed using each sample.

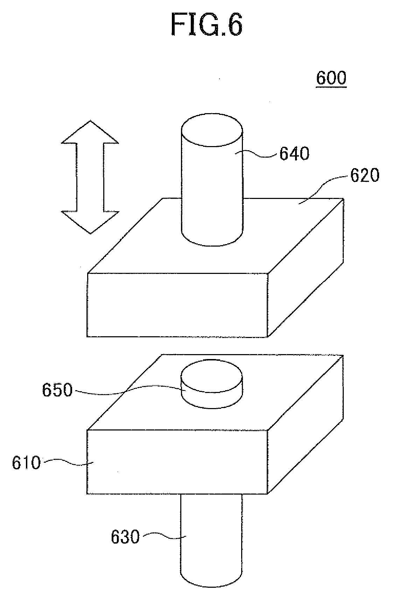

The evaluation test was performed by using the testing apparatus illustrated in FIG. 6.

The testing apparatus 600 illustrated in FIG. 6 includes a lower base 610 and an upper base 620 positioned above the lower base 610. The lower base 610 and the upper base 620 have the same shape and size. The lower base 610 and the upper base 620 are arranged along the vertical direction. Both the lower base 610 and the upper base 620 have a built-in heater (not illustrated). Each of the lower base 610 and the upper base 620 can be heated to a predetermined temperature. The lower base 610 has a bottom surface to which a support member 630 is connected. The support member 630 is an immobile type. Therefore, the lower base 610 is also immobile. On the other hand, the upper base 620 has a top surface to which a support member 640 is connected. The support member 640 can move along the vertical direction. Therefore, the upper base 620 can move vertically. Further, the upper base 620 is a load cell which can measure the load applied to a bottom surface of the upper base 620 where the upper base 620 and the lower base 610 are in contacting state.

By using the testing apparatus 600, the retaining force (surface pressure) of each sample is measured according to the following procedures.

First, any of the above-described samples 650 (56.42 mm ø) is placed on the top surface of the lower base 610 of the testing apparatus 600. Then, the upper base 620 is lowered by lowering the support member 640. The upper base 620 is lowered until the apparent density GBD (Gap Bolt Density) of the sample 650 becomes 0.35 g/cm$^3$. It is to be noted that GBD is an index value calculated by (mass of sample 650/area of sample 650/thickness of sample 650).

Then, the heaters inside the lower and the upper bases 610, 620 were heated so that the temperature of the lower base 610 becomes 400 °C and the temperature of the upper base 620 becomes 700 °C (i.e. so that the temperature at the lower side of the sample 650 becomes 400 °C and the temperature of the upper side of the sample 650 becomes 700 °C) while the apparent density GBD is maintained at 0.35 g/cm$^3$. The temperature increase rate of the lower base 610 was set to 8.6 °C/minute, and the temperature increase rate of the upper base 620 was set to 15 °C/minute.

When the temperature of the lower and the upper bases 610, 620 becomes 400 °C and 700 °C, respectively, the load on the sample 650 is measured with a load cell. The measuring is performed at least within 5 minutes after the temperatures of the lower and the upper bases 610, 620 are increased to predetermined temperatures. The maximum value obtained is assumed as the initial surface pressure of the sample 650.

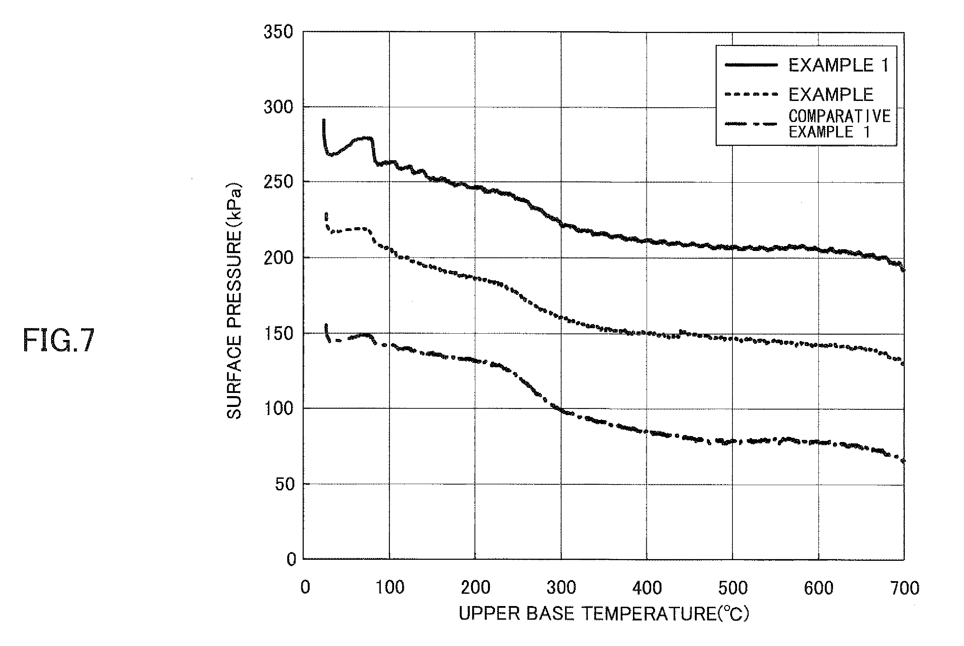

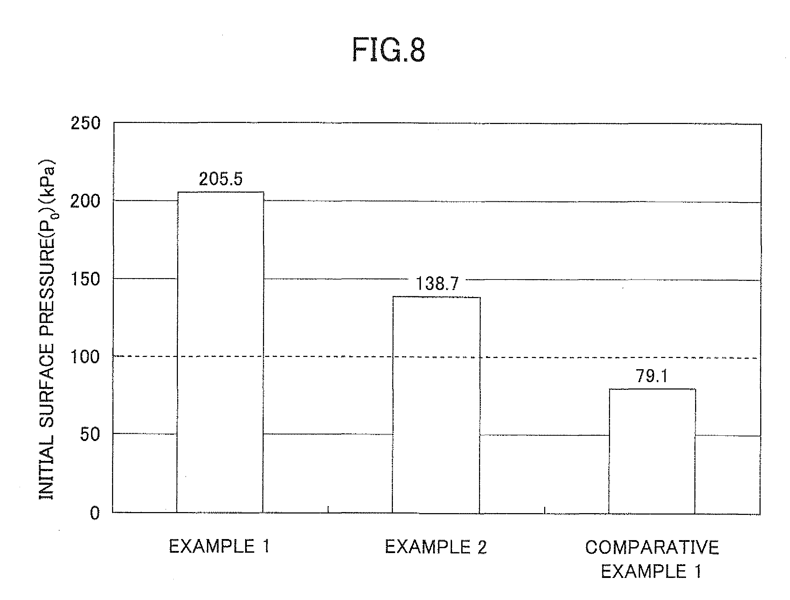

Fig. 7 illustrates a relationship between the temperature of the upper base 620 obtained during the evaluation test of surface pressure and the initial surface pressure of the samples of examples 1, 2, and comparative example 1. Further, Fig. 8 illustrates a graph of the values of surface pressure ($P_0$) of the samples of examples 1, 2, and comparative example 1.

According to these results, it is understood that the initial surface pressure ($P_0$) of the sample of comparative example 1 is approximately 80 kPa whereas the initial surface pressure ($P_0$) of examples 1 and 2 is over 100 kPa.

Based on the above, it was confirmed that the mat material according to the present invention has a significantly high initial retaining force compared to a conventional mat material using e-glass.

(High temperature cycle test)

Next, a high temperature cycle test was performed on each of the samples of examples 1, 2, and comparative example 1 for understanding the changes of retaining force after repeatedly applying load of compression and decompression to mat material.

The high temperature cycle test was performed with the following procedures by using the above-described testing apparatus illustrated in Fig. 6.

First, any one of the above-described samples 650 (56.42 mm Φ) is placed on the top surface of the lower base 610 of the testing apparatus 600. Then, the upper base 620 is lowered by lowering the support member 640. The upper base 620 is lowered until the apparent density GBD of the sample 650 becomes 0.38 g/cm$^3$.

Then, the heaters inside the lower and the upper bases 610, 620 were heated so that the temperature of the lower base 610 becomes 400 °C, and the temperature of the upper base 620 becomes 700 °C (i.e. so that the temperature at the lower side of the sample 650 becomes 400 °C and the temperature of the upper side of the sample 650 becomes 700 °C) while the apparent density GBD is maintained at 0.35 g/cm$^3$. The temperature increase rate of the lower base 610 was set to 8.6 °C/minute, and the temperature increase rate of the upper base 620 was set to 15 °C/minute.

In the heating, the upper base 620 is gradually heated, and the compression of the sample 650 is gradually relieved so that the apparent density GBD of the sample becomes 0.35 g/cm$^3$ when the sample 650 is heated to the above-described predetermined temperatures.

For 5 minutes, the sample 650 is maintained in a state where the temperature of the lower and the upper bases 610, 620 is 400 °C and 700 °C, respectively, while the apparent density GBD of the sample is maintained to 0.35 g/cm³. Then, the upper base 620 is lowered until the apparent density GBD of the sample becomes 0.38 g/cm³. Upon reaching such state, the upper base 620 is immediately raised. Here, the upper base 620 is raised until the apparent density GBD becomes 0.35 g/cm³. When reaching this state, the load applied to the sample 650 is measured with a load cell. The measured load is assumed as the surface pressure ($P_1$) (unit kPa) after 1 cycle.

This operation is repeated 1000 times. Until the apparent density GBD of the sample becomes 0.35 g/cm³ for the 1300th time, the load ($P_{1000}$) at the time of raising the upper base 620 is measured with the load cell.

Based on the obtained results, the retaining force decrease rate of the sample was calculated by the following expression:

$$\text{Retaining force decrease rate D (\%)} = \{(P_1 - P_{1000})/(P_1)\} \times 100 \quad \text{... Expression (1)}$$

Table 2 indicates the surface pressure $P_1$ after 1 cycle and the surface pressure $P_{1000}$ after 1000 cycles as measured by the high temperature cycle test, and the retaining force decrease rate D (%) of each sample.

[Table 2]

| SAMPLE | GLASS FIBER | CYCLE TEST RESULT | | |
|---|---|---|---|---|
| | | RETAINING FORCE AFTER 1 CYCLE ($P_1$) | RETAINING FORCE AFTER 1000 CYCLES ($P_{1000}$) | DECREASING RATE OF RETAINING FORCE (D) |
| EXAMPLE 1 | COMPOSITION OF FIRST GLASS FIBER | 94.0 | 69.6kPa | 26% |
| EXAMPLE 2 | COMPOSITION OF SECOND GLASS FIBER | 70.9 | 48.2kPa | 32% |
| COMPARATIVE EXAMPLE 1 | TYPICAL E-GLASS | 27.2 | 15.2kPa | 44% |

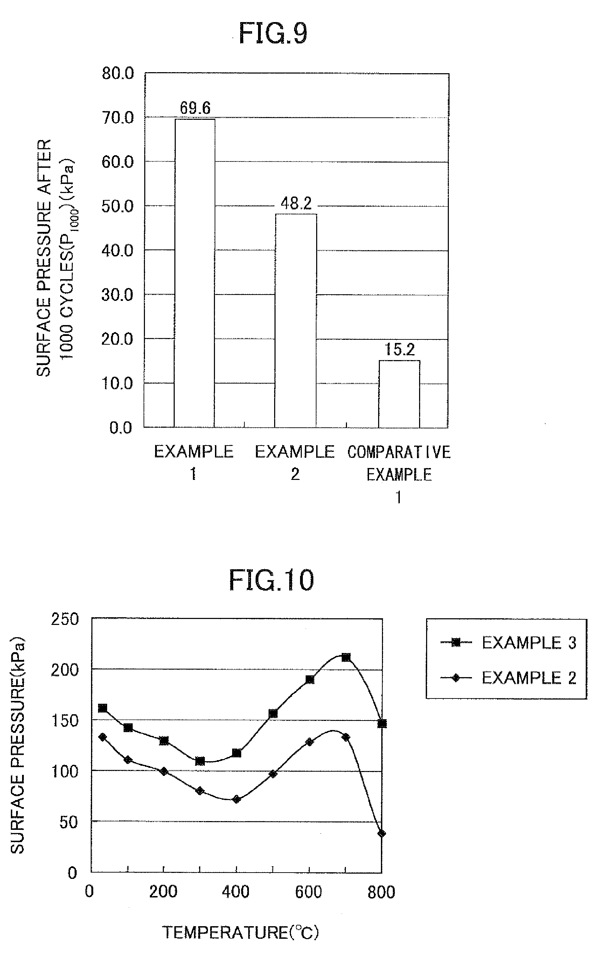

Further, Fig. 9 is a graph illustrating the surface pressure after 1000 cycles ($P_{1000}$) of the samples of example1, example 2, and comparative example 1.

According to these results, it is understood that examples 1 and 2 have a surface pressure which is larger than that of comparative example 1 after 1000 cycles ($P_{1000}$) and exhibit a retaining force decrease rate that is significantly low. Particularly, in a case of the sample of example 1, the surface pressure after 1000 cycles ($P_{1000}$), was approximately 70 kPa. This value is equivalent to a value (45 kPa to 70 kPa) obtained from a typical mat material using an inorganic fiber as alumina fiber.

According to the foregoing test results, it is confirmed that a significantly high initial retaining force can be obtained by using the mat material according to the present invention compared to using a conventional mat material using e-glass. Further, it is confirmed that the mat material according to the present invention can maintain a comparatively satisfactory retaining force even after repeatedly receiving load from compression/decompression.

(Example 3)

A commercially available glass fiber having an average diameter of 11 $\mu$m $\Phi$ and a commercially available vermiculite (manufactured by AVI (Australian Vermiculite Industries), Grade 1) were prepared.

The nominal composition of glass fiber is indicated in column "composition of first glass fiber" of the above-described Table 1. The glass fiber includes substantially no $B_2O_3$.

The glass fiber was cut so that the average fiber length is 3 mm. Further, the glass fiber was used after being maintained at a temperature of 740 °C for 10 minutes and then being cooled to 650 °C at a rate of 10 °C/minute.

The vermiculite was used after being added to water of 500 ml and being crushed for 1 minute with a mixer (manufactured by TESCOM & Co. Ltd, type TMD1000E5).

Then, the glass fiber 24.7 g and the vermiculite 6.4 g were placed inside a mixer, agitated for 1 minute, to thereby obtained opened fibers. Then, a slurry was prepared by adding latex 3. 5 g (solid content 50%), alumina sol 1.2 g (solid content 20%), and an aggregate 30 g (solid content 0.5%) were to water containing the glass fiber having opened fibers and stirring the mixture for 1 minute.

Then, a raw material mat was obtained by introducing the slurry into a paper-making machine and filtering its moisture. Then, the raw material mat was dried by being maintained at 105 °C in a state being compressed by a pressing machine. Thereby, a mat material having a sheet density of 0.14 g/cm$^3$ was obtained.

Then, a sample of the mat material (hereinafter referred to as "sample according to example 3") was obtained by cutting the mat material to a predetermined size. It is to be noted that the amount of vermiculite contained in the mat material is 25 wt%.

(Comparative example 2)

A mat material according to comparative example 2 is manufactured by the same method as that of example 3. However, with comparative example 2, a commercially available e-glass (typical e-glass) (average diameter 11 $\mu$m Φ) was used as the glass fiber.

(High temperature surface pressure evaluation test)

A high temperature surface pressure evaluation test was performed on both samples for evaluating the retaining force of the mat material according to example 3 and the comparative example 2 at a high temperature. The testing method is the same as that of the above-described column "initial surface pressure evaluation test". However, the initial apparent density GBD was set to 0.40 g/cm$^3$. The upper base 620 was heated from room temperature to 800 °C, and the lower base 610 was heated from room temperature to 456 °C. The temperature increase rate of the upper base 620 was 15 °C/minute, and the temperature increase rate of the lower base 610 was 8.6 °C/minute.

Fig. 10 indicates the results of measuring the initial surface pressure of example 3 and comparative example 2.

As illustrating in the drawing, in a case where the mat material of example 3 having an expansive material added thereto is in a range of 500 °C to 800 °C, an improvement of surface pressure was observed by the addition of expansive material.

According to the results, it was shown that the initial surface pressure of mat material can be further improved by adding an expansive material to the mat material according to the present invention, particularly in a range of 500 °C to 800 °C.

In the case of comparative example where a typical e-glass is used as the glass fiber, improvement of initial surface pressure by the addition of expansive material was observed in a range of 500 °C to 700 °C. Nevertheless, a sufficient initial surface pressure could not be attained in other temperature ranges.

INDUSTRIAL APPLICABILITY

The mat material according to the present invention can be applied to a retaining seal member of an exhaust gas processing apparatus used in a vehicle or the like.

This application is based upon and claims the benefit of priority of the prior Japanese Patent Application Nos. 2009-156538 and 2010-070705, filed on July 1, 2009 and March 25, 2010, respectively, the entire contents of which are incorporated herein by reference.

EXPLANATION OF PREFERENCE NUMERALS

| | |
|---|---|
| 10 | exhaust gas processing apparatus |
| 12 | metal casing |
| 20 | exhaust gas processing body |
| 24 | retaining seal member |
| 30 | mat material |
| 50 | engagement protrusion |
| 60 | engagement recess |
| 600 | testing apparatus |
| 610 | lower base |
| 620 | upper base |

630, 640   support member
650        sample

**Claims**

1.  A mat material **characterized by** comprising:

    a glass fiber;
    wherein the glass fiber includes 52 to 62% by weight of $SiO_2$, 9 to 17% by weight of $Al_2O_3$, 17 to 27% by weight of CaO, 0 to 9% by weight of MgO, 0 to 4% by weight of $TiO_2$, and 0 to 5% by weight of ZnO;
    wherein the glass fiber includes substantially no $B_2O_3$;
    wherein the glass fiber includes 0 to 2% by weight of a total sum of $Na_2O + K_2O$;
    wherein the mat material is interposed between an upper base and a lower base;
    wherein a surface pressure is 100 kPa or more when a temperature of the upper base and a temperature of the lower base reaches 700 °C and 400°C, respectively, in a case of increasing the temperature of the upper base at a temperature increase rate of 15 °C/minute at the same time of increasing the temperature of the lower base at a temperature increase rate of 8.6 °C/minute where GBD (Gap Bolt Density) = 0.35 $g/cm^3$.

2.  The mat material as claimed in claim 1, **characterized in that** the glass fiber includes substantially no fluorine.

3.  The mat material as claimed in claim 1, **characterized in that** the glass fiber includes 59 to 62% by weight of $SiO_2$, 12 to 15% by weight of $Al_2O_3$, 20 to 24% by weight of CaO, 1 to 4% by weight of MgO, and 0 to 0.9% by weight of $TiO_2$; wherein the glass fiber includes substantially no ZnO; wherein the glass fiber includes 0 to 1% by weight of a total sum of $Na_2O + K_2O$.

4.  The mat material as claimed in claim 1 **characterized in that** the glass fiber includes 56 to 62% by weight of $SiO_2$, 9 to 15% by weight of $Al_2O_3$, 17 to 25% by weight of CaO, 0 to 5% by weight of MgO, 0 to 4% by weight of $TiO_2$, and 0 to 5% by weight of ZnO; wherein the glass fiber includes 0 to 1% by weight of a total sum of $Na_2O + K_2O$.

5.  The mat material as claimed in one of claims 1 to 4, **characterized in that** an average diameter of the glass fiber ranges from 9 $\mu$m to 13 $\mu$ m.

6.  The mat material as claimed in one of claims 1 to 5, **characterized in that** an average length of the glass fiber ranges from 1 mm to 10 mm or 5 mm to 100 mm.

7.  The mat material as claimed in one of claims 1 to 6, **characterized by** further comprising:

    an organic binder.

8.  The mat material as claimed in one of claims 1 to 7, **characterized by** further comprising:

    an expansive material.

9.  The mat material as claimed in claim 8, **characterized in that** the expansive material includes at least one of the materials selected from a group including vermiculite, bentonite, bronze mica, perlite, expandable graphite, and expandable fluoro-mica.

10. An exhaust gas processing apparatus **characterized by** comprising:

    an exhaust gas processing body including two openings throughwhich an exhaust gas flows;
    a retaining seal member that is used by winding around at least a part of an outer peripheral surface of the exhaust gas processing body except for the openings; and
    a cylindrical member that accommodates the exhaust gas processing body being wound around by the retaining seal member;
    wherein the retaining seal member includes the mat materials claimed in one of claims 1 to 9.

11. The exhaust gas processing apparatus as claimed in claim 10, **characterized in that** the exhaust gas processing body is a catalyst carrier or an exhaust gas filter.

# FIG.1

Y

X
(WOUND DIRECTION)

30(24)

50

70

71

61

60

61

62

EP 2 450 542 A1

# FIG.2

# FIG.3

10

24(30)

20

2

4

12

24(30)

# FIG.4

START

STEP OF PREPARING GLASS FIBER HAVING SPECIFIC COMPOSITION ——S110

STEP OF PREPARING LAMINATE SHEET BY USING GLASS FIBER ——S120

STEP OF FORMING MAT MATERIAL FROM LAMINATE SHEET BY USING NEEDLING PROCESS ——S130

END ——S140

# FIG.5

```
           ┌──────────────┐
           │    START     │
           └──────┬───────┘
                  │
                  ▼
  ┌───────────────────────────────────────┐
  │  STEP OF PREPARING GLASS FIBER HAVING  │ ～S210
  │          SPECIFIC COMPOSITION          │
  └───────────────────┬───────────────────┘
                      │
                      ▼
  ┌───────────────────────────────────────┐
  │  STEP OF PREPARING SLURRY BY USING GLASS │ ～S220
  │                 FIBER                  │
  └───────────────────┬───────────────────┘
                      │
                      ▼
  ┌───────────────────────────────────────┐
  │ STEP OF FORMING MAT MATERIAL FROM SLURRY │ ～S230
  │    BY USING SHEET-MAKING METHOD        │
  └───────────────────┬───────────────────┘
                      │
                      ▼
           ┌──────────────┐
           │     END      │ ～S240
           └──────────────┘
```

# FIG.6

FIG.7

FIG.8

EP 2 450 542 A1

# FIG.9

# FIG.10

## INTERNATIONAL SEARCH REPORT

| International application No. |
| --- |
| PCT/JP2010/061118 |

### A. CLASSIFICATION OF SUBJECT MATTER
*F01N3/28*(2006.01)i, *B01D53/86*(2006.01)i

According to International Patent Classification (IPC) or to both national classification and IPC

### B. FIELDS SEARCHED

Minimum documentation searched (classification system followed by classification symbols)
F01N3/28, B01D53/86

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2008-523267 A (3M Innovative Properties Co.), 03 July 2008 (03.07.2008), paragraphs [0021] to [0026], [0032] to [0033], [0042], [0046] to [0047], [0051], [0060]; fig. 1 to 2 & WO 2006/065534 A1 & EP 1828069 A1 & US 2009/0208385 A1 & KR 10-2007-0091649 A & CN 101115688 A | 1-11 |

☐ Further documents are listed in the continuation of Box C. ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 29 July, 2010 (29.07.10) | 10 August, 2010 (10.08.10) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006516043 A
- JP 2009156538 A
- JP 2010070705 A